# EUROPÄISCHE PATENTSCHRIFT

(11) **EP 2 841 777 B1**
(45) Veröffentlichungstag und Bekanntmachung des Hinweises auf die Patenterteilung: **13.07.2016**
(21) Anmeldenummer: 13719278.7
(22) Anmeldetag: 24.04.2013
(51) Int. Cl.: F16B 21/18

(54) **SICHERUNGSRING MIT SPANNMECHANISMUS ZUR SICHERUNG EINES GETRIEBEBAUTEILS UND GETRIEBEEINRICHTUNG MIT EINEM SOLCHEN SICHERUNGSRING**
CIRCLIP WITH A CLAMPING MECHANISM FOR SECURING A TRANSMISSION COMPONENT AND TRANSMISSION SYSTEM WITH SUCH A CIRCLIP
BAGUE DE SÉCURITÉ COMPORTANT UN MÉCANISME DE SERRAGE, DESTINÉE À SÉCURISER UNE PIÈCE DE TRANSMISSION, ET DISPOSITIF DE TRANSMISSION COMPORTANT UNE TELLE BAGUE DE SÉCURITÉ

(30) Priorität: 28.04.2012 DE 102012008685
(43) Veröffentlichungstag der Anmeldung: 04.03.2015
(73) Patentinhaber: Audi AG, 85045 Ingolstadt (DE)
(72) Erfinder: WAGNER, Rupert, 86556 Kühbach (DE)
(74) Vertreter: Wohnert, Dietmar
(86) Internationale Anmeldenummer: PCT/EP2013/001227
(87) Internationale Veröffentlichungsnummer: WO 2013/159919

(56) Entgegenhaltungen:
- WO-A1-99/13232
- FR-A1- 2 349 057
- FR-A1- 2 600 128
- GB-A- 2 152 170
- US-A- 2 811 889

## Beschreibung

Die Erfindung betrifft einen Sicherungsring zur Sicherung eines Getriebebauteils gegen axiale Verschiebung, wobei dieser Sicherungsring in Umfangsrichtung eine Öffnung aufweist, an der die Ringenden mit radial nach außen weisenden Schenkeln ausgebildet sind.

Die Erfindung betrifft ferner auch eine Getriebeeinrichtung.

Ein Sicherungsring der betreffenden Art dient bspw. zur axialen Sicherung einer Getriebewelle, eines Wälzlagers oder dergleichen in einem Getriebegehäuse. Derartige Sicherungsringe werden zuweilen auch als Springringe, Sprengringe oder Wellensicherungsringe bezeichnet. Zum Stand der Technik wird auf die DE 1 969 834 U und auf die DE 889 388 B verwiesen.

Aus der den nächstliegenden Stand der Technik offenbarenden WO 99/13232 A1 sind Sicherungsringe bekannt, die mit einer Ringöffnung ausgebildet sind, wobei an der Ringöffnung die Ringenden in radialer Richtung nach außen weisende Schenkel bzw. Arme bilden. Zur temporären Sicherung während der Montage kann eine Klammer oder dergleichen auf die Schenkel bzw. Arme aufgesteckt werden.

Aus der GB 349,329 A sind Sicherungsringe mit nach radial innen weisenden Schenkeln bekannt. Bei einer Ausführungsform weist der Sicherungsring ferner ein umzubiegendes Federringende auf, das als Sperrkörper fungiert.

Der Erfindung liegt die Aufgabe zugrunde, einen Sicherungsring der betreffenden Art anzugeben, der einfach montierbar und der funktionssicher ist.

Die Lösung der Aufgabe erfolgt mit einem erfindungsgemäßen Sicherungsring zur Sicherung eines Getriebebauteils gegen axiale Verschiebung, wobei dieser Sicherungsring in Umfangsrichtung eine Öffnung aufweist, an der die Ringenden mit radial nach außen weisenden Schenkeln bzw. Armen ausgebildet sind. Es ist vorgesehen, dass dieser Sicherungsring einteilig aus einem Metallmaterial gebildet ist und die Schenkel mit einem Spannmechanismus ausgebildet sind, wozu einer der Schenkel einen angeformten, gegen den anderen Schenkel wirkenden Federbügel oder Schlossbügel aufweist, der die Schenkel in Umfangsrichtung auseinander drücken und so den Sicherungsring in Einbaulage bzw. Einbauposition definiert spannen und insbesondere einen radial definierten Einbaufall sichern kann.

Der erfindungsgemäße Sicherungsring ermöglicht eine Sicherung eines Getriebebauteils auch bei begrenzter Zugänglichkeit. Eine Montierbarkeit ist auch bei begrenzter Zugänglichkeit gewährleistet.

Unter einem Spannmechanismus wird eine mechanische Einrichtung bzw. eine Einrichtung aus wenigstens einer mechanischen Komponente verstanden, die den angegebenen Zweck, nämlich das definierte Auseinanderdrücken der Schenkel am Sicherungsring, erfüllt.

Es ist vorgesehen, dass einer der Schenkel des erfindungsgemäßen Sicherungsrings mit einem gegen den anderen Schenkel wirkenden Federbügel oder Schlossbügel ausgebildet ist. Unter einem Federbügel wird ein federelastischer Bügel verstanden. Unter einem Schlossbügel wird ein im Wesentlichen starrer Bügel verstanden. Der Federbügel oder Schlossbügel drückt die Schenkel des Sicherungsrings auseinander und gewährleistet damit einen sicheren und definierten Halt des Sicherungsrings in Einbaulage. Besonders bevorzugt ist vorgesehen, dass der Federbügel oder Schlossbügel erst nach der Montage des erfindungsgemäßen Sicherungsrings, d. h. wenn sich der Sicherungsring also in Einbaulage bzw. Einbauposition befindet, mit dem anderen Federbügel in Eingriff gebracht werden kann. Der Federbügel oder Schlossbügel des einen Schenkels befindet sich demnach nicht dauerhaft in Kontakt bzw. im Eingriff mit dem anderen Schenkel. Hierdurch lässt sich eine besonders einfache Montage und Demontage bewerkstelligen.

Der Federbügel und insbesondere der Schlossbügel kann über eine Stiftverbindung mit dem anderen Schenkel formschlüssig verbindbar sein. Bspw. weist hierzu der Federbügel oder der Schlossbügel an seinem freien Ende einen Stiftfortsatz oder dergleichen auf, der formschlüssig in eine korrespondierende Bohrung oder dergleichen am anderen Schenkel eingreifen kann (oder umgekehrt), wodurch eine Justierung des Federbügels bzw. Schlossbügels sowohl in radialer Richtung als auch in axialer Richtung herbeigeführt wird (Schlossmechanismus).

Der Federbügel und insbesondere der Schlossbügel kann auch über eine Profilverbindung mit dem anderen Schenkel formschlüssig verbindbar sein. Eine solche Profilverbindung ist z. B. ein V-förmiger Anstoß, ein W-förmiger Anstoß, ein trapezförmiger Anstoß oder dergleichen. Hierüber kann eine Justierung des Federbügels bzw. Schlossbügels insbesondere in axialer Richtung herbeigeführt werden (Schlossmechanismus).

Ein Federbügel, oder gegebenenfalls auch ein Schlossbügel, kann mit einer sich in axialer Richtung erstreckenden Schlaufe bzw. einem Bogen ausgebildet sein. Die axiale Richtung erstreckt sich hierbei senkrecht zur radialen Richtung und ist durch das zu sichernde Getriebebauteil (Getriebewelle, Wälzlager oder dergleichen) vorgegeben. Eine solche Schlaufe kann z. B. U-förmig oder V-förmig ausgestaltet sein.

Bevorzugt ist vorgesehen, dass der erfindungsgemäße Sicherungsring im Wesentlichen kreisrund ausgebildet ist. Alternativ kann der erfindungsgemäße Sicherungsring auch oval, elliptisch oder dergleichen ausgebildet sein.

Der erfindungsgemäße Sicherungsring ist einteilig bzw. einstückig aus einem Metallmaterial gebildet. Insbesondere ist vorgesehen, dass der erfindungsgemäße Sicherungsring aus einem Federstahlmaterial gebildet ist. Ferner kann vorgesehen sein, dass der erfindungsgemäße Sicherungsring aus einem Draht gebildet ist. Der Draht kann einen runden oder viereckigen Querschnitt aufweisen. Der Draht kann gebogen sein.

Mit dem nebengeordneten Anspruch erstreckt sich die Lösung der Aufgabe auch auf eine Getriebeeinrichtung, insbesondere für einen Personenkraftwagen, mit wenigstens einem Getriebewellenlager, das mit einem erfindungsgemäßen Sicherungsring gegen axiale Verschiebung gesichert ist.

Damit sind eine Sicherung des Getriebewellenlagers und/oder einer Montierbarkeit des Sicherungsrings auch bei begrenzter Zugänglichkeit gewährleistet oder ermöglicht. Insbesondere sind eine Sicherung des Getriebewellenlagers und/oder eine Montierbarkeit des Sicherungsrings auch dann ermöglicht, wenn ein Montageöffnung nicht anordenbar ist. Dies kann beispielsweise aufgrund eines Aggregats, wie einer Reibungskupplung, der Fall sein. Eine gesonderte Montageöffnung kann entfallen. Damit ist ein Herstellungsaufwand reduziert. Eine axiale Baulänge kann reduziert sein.

Bevorzugt ist vorgesehen, dass in dem Getriebewellenlager eine Getriebewelle aufgenommen bzw. gelagert ist, wobei diese Getriebewelle über das mittels Sicherungsring gesicherte Getriebewellenlager gleichfalls gegen axiale Verschiebung (zumindest in einer axialen Richtung) gesichert ist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
Fig. 1 eine Schnitt-Teilansicht durch eine PKW-Getriebeeinrichtung;
Fig. 2 in mehreren Teilbildern die Montagabfolge eines erfindungsgemäßen Sicherungsrings, jeweils in einer axialen Draufsicht; und
Fig. 3 mehrere Ausführungsmöglichkeiten für Schlossbügel und Federbügel an einem erfindungsgemäßen Sicherungsring, jeweils in einer perspektivischen Ansicht.

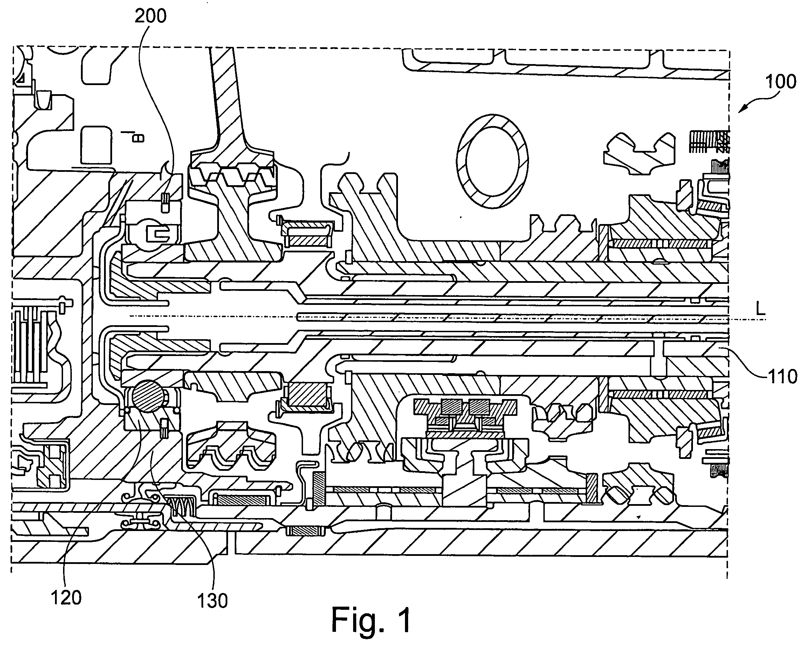

Fig. 1 zeigt eine Getriebeeinrichtung 100 für einen Personenkraftwagen (PKW). Die Getriebeeinrichtung 100 weist eine Getriebewelle 110 auf, die an ihrem linksseitigen axialen Ende (gemäß der in Fig. 1 gezeigten Darstellung) in einem Getriebewellenlager bzw. Wälzlager 120 aufgenommen und über dieses Getriebewellenlager 120 sowohl abgestützt als auch gegen axiales Verschieben in Richtung der Längs- bzw. Drehachse L gesichert ist. Das Getriebewellenlager 120 ist innerhalb des Getriebegehäuses 130 mit einem erfindungsgemäßen Sicherungsring 200 gegen axiale Verschiebung, d. h. gegen Verschiebung in Richtung der Längsachse L, gesichert.

Der Sicherungsring 200 greift mit seinem radial inneren Ringabschnitt in eine an der Außenumfangsfläche des Getriebewellenlagers 120 ausgebildete äußere Ringnut ein. Mit seinem radial äußeren Ringabschnitt greift der Sicherungsring 200 in eine innere Ringnut an der Innenumfangsfläche des im Getriebegehäuse 130 ausgebildeten Lagersitzes ein. Hierdurch wird in bekannter Weise eine axiale Sicherung des Getriebewellenlagers 120 und der darin aufgenommenen Getriebewelle 110 erzielt.

Der aus einem Federstahl-Flachmaterial bzw. Blechmaterial gebildete Sicherungsring 200 muss bei der häufig manuellen Montage der Getriebeeinrichtung 100 richtig positioniert werden. Dies wird durch die beengten Platzverhältnisse und die schlechte Zugänglichkeit erschwert. Selbiges gilt für die Demontage, bspw. im Reparaturfall. Der erfindungsgemäße Sicherungsring 200 ist so ausgebildet, dass dieser einfach montiert werden kann und sich nach der Montage sicher bzw. funktionssicher in seiner Einbauposition bzw. Einbaulage festhalten kann, wie nachfolgend näher erläutert.

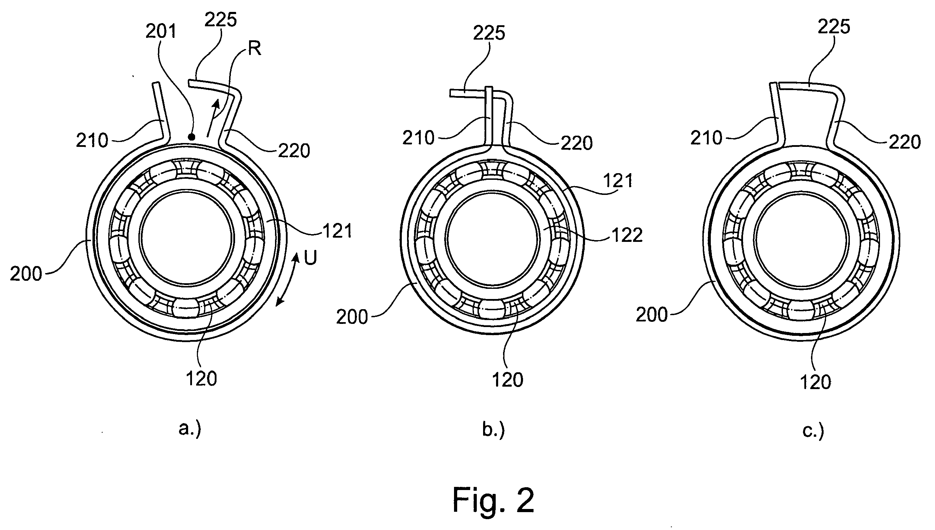

Fig. 2 zeigt einen erfindungsgemäßen Sicherungsring 200 in einer axialen Draufsicht (bzgl. Fig. 1 entspricht dies einer Blickrichtung entlang der Längsachse L). Der Sicherungsring 200 weist eine gemäß Darstellung obenliegende Öffnung 201 auf, an der die die Öffnung 201 bestimmenden Ringenden mit radial nach außen weisenden Schenkeln 210 und 220 ausgebildet sind. Unter radial nach außen weisend wird hierbei verstanden, dass diese Schenkel zumindest annähernd in einer radialen Richtung nach außen verlaufen, wobei dies nicht der exakten mathematischen radialen Richtung entsprechen muss. Die Umfangsrichtung ist mit U angegeben. Die radiale Richtung ist mit R angegeben.

Der gemäß Darstellung rechtsseitige Schenkel 220 ist mit einem angeformten Schlossbügel 225 ausgebildet, der mit dem anderen Schenkel 210 in Eingriff bringbar ist, so dass die Schenkel 210 und 220 mittels dieses Schlossbügels in Umfangsrichtung U definiert auseinander gedrückt werden können.

Zur Montage wird der Sicherungsring 200 an der Öffnung bzw. Ringöffnung 201 aufgeweitet (was durch entsprechendes Auseinanderdrücken der Schenkel 210 und 220 erfolgt) und über den Außenlagerring 121 des Getriebewellenlagers 120 geschoben, bis dieser in die äußere Ringnut an der Außenumfangsfläche des Getriebewellenlagers 120 eingreifen kann. Dies ist in Fig. 2a gezeigt.

Danach wird der Sicherungsring 200 an der Öffnung 201 zusammengedrückt (was durch entsprechendes Zusammendrücken der Schenkel 210 und 220 erfolgt), wobei sich der Sicherungsring 200 in die äußere Ringnut an der Außenumfangsfläche des Getriebewellenlagers 120 einlegt. Dies ist in Fig. 2b gezeigt.

Hieraufhin kann das Getriebewellenlager 120 zusammen mit dem Sicherungsring 200 (und gegebenenfalls einschließlich der im Innenlagerring 122 eingepressten Getriebewelle 110) in den korrespondierenden Lagersitz im Getriebegehäuse 130 eingesetzt werden. Hiernach wird der Sicherungsring 200 an den Schenkeln 210 und 220 freigeben, woraufhin sich dieser aufweitet und mit seinem radial äußeren Ringabschnitt in die innere Ringnut an der Innenumfangsfläche des im Getriebegehäuse 130 ausgebildeten Lagersitzes eingreift.

Anschließend wird der Schlossbügel 225 am Schenkel 220 mit dem gegenüberliegenden anderen Schenkel 210 ein Eingriff gebracht. Dies ist in Fig. 2c gezeigt. Hierdurch werden die beiden Schenkel 210 und 220 in Umfangsrichtung U definiert auseinander gedrückt, was dazu führt, dass der in Einbaulage befindliche Sicherungsring 200 definiert aufgeweitet und gespannt wird, idealerweise derart, dass sich dieser mit seiner Außenumfangsfläche an den Grund der inneren Ringnut an der Innenumfangsfläche des im Getriebegehäuse 130 ausgebildeten Lagersitzes anlegt, wie in Fig. 1 gezeigt. Der Schlossbügel 225 bewirkt eine dauerhafte Arretierung dieses Zustands.

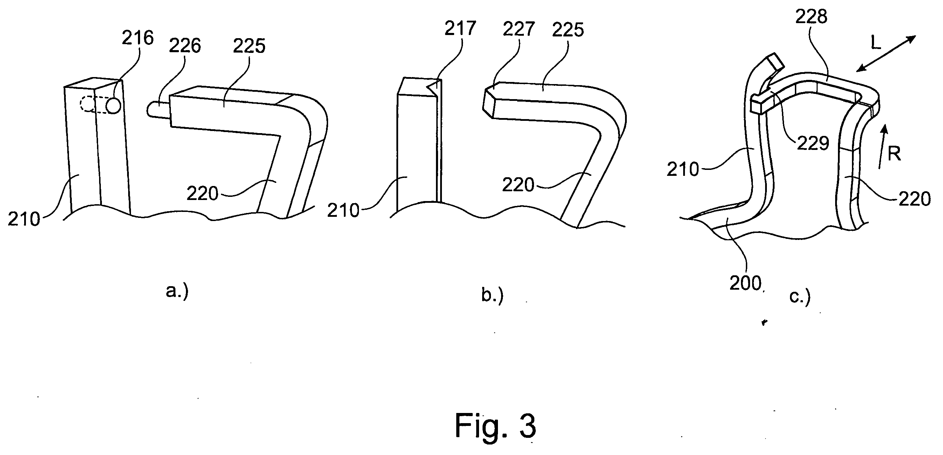

Fig. 3 zeigt mehrere Ausführungsmöglichkeiten für den Schlossbügel 225, die nachfolgend kurz erläutert werden.

Bei der in Fig. 3a gezeigten Ausführungsmöglichkeit ist der Schlossbügel 225 über eine Stiftverbindung mit dem anderen Schenkel 210 formschlüssig verbindbar, wozu der Schlossbügel 225 an seinem freien Ende einen Stiftfortsatz 226 aufweist, der in eine korrespondierende Bohrung 216 am anderen Schenkel 210 eingreifen kann. Dieses Eingreifen kann als Schlossmechanismus bezeichnet werden.

Bei der in Fig. 3b gezeigten Ausführungsmöglichkeit ist der Schlossbügel 225 an seinem freien Ende mit einer V-förmigen Profilierung 227 ausgebildet, die in eine korrespondierende Profilierung 217 am anderen Schenkel 210 eingreifen kann. Alternativ können auch andere Profilformen vorgesehen sein. Auch dieses Eingreifen kann als Schlossmechanismus bezeichnet werden.

Bei der in Fig. 3c gezeigten Ausführungsmöglichkeit ist anstelle eines Schlossbügels ein Federbügel 228 vorgesehen. Der Federbügel 228 drückt sich mit seinem freien Ende gegen den Schenkel 210 ab, wobei die Federkraft durch eine sich in axialer Richtung L erstreckende U-förmige bzw. C-förmige Schlaufe erzeugt wird. Hierfür ist der zunächst radial nach außen verlaufende Schenkel 220 in eine axiale Richtung umgebogen und beschreibt dann eine Schlaufe, die als Federbogen fungiert. Mit 229 ist eine Einkerbung am freien Ende des Federbügels 228 bezeichnet, in die der Schenkel 210 formschlüssig eingreifen bzw. einrasten kann (Schlossmechanismus).

## Patentansprüche

1. Sicherungsring (200) zur Sicherung eines Getriebebauteils (110) gegen axiale Verschiebung, wobei dieser Sicherungsring (200) in Umfangsrichtung (U) eine Öffnung (201) aufweist, an der die Ringenden mit radial (R) nach außen weisenden Schenkeln (210, 220) ausgebildet sind, **dadurch gekennzeichnet, dass** dieser Sicherungsring (200) einteilig aus einem Metallmaterial gebildet ist und die Schenkel (210, 220) mit einem Spannmechanismus ausgebildet sind, wozu einer der Schenkel (220) einen angeformten, gegen den anderen Schenkel (210) wirkenden Federbügel (228) oder Schlossbügel (225) aufweist, der die Schenkel (210, 220) in Umfangsrichtung (U) auseinander drücken und so den Sicherungsring (200) in Einbaulage definiert spannen kann.

2. Sicherungsring (200) nach Anspruch 1, **dadurch gekennzeichnet, dass** der Federbügel (228) oder Schlossbügel (225) erst nach der Montage des Sicherungsrings (200) mit dem anderen Schenkel (210) in Eingriff bringbar ist.

3. Sicherungsring (200) nach Anspruch 2, **dadurch gekennzeichnet, dass** der Federbügel (228) oder Schlossbügel (225) über eine Stiftverbindung (226, 216) mit dem anderen Schenkel (210) formschlüssig verbindbar ist.

4. Sicherungsring (200) nach Anspruch 2, **dadurch gekennzeichnet, dass** der Federbügel (228) oder Schlossbügel (225) über eine Profilverbindung (227, 217) mit dem anderen Schenkel (210) formschlüssig verbindbar ist.

5. Sicherungsring (200) nach Anspruch 2, **dadurch gekennzeichnet, dass** der Federbügel (228) mit einer sich in axialer Richtung (L) erstreckenden Schlaufe ausgebildet ist.

6. Sicherungsring (200) nach einem der vorhergehenden Ansprüche, **dadurch gekennzeichnet, dass** dieser im Wesentlichen kreisrund ausgebildet ist.

7. Sicherungsring (200) nach einem der vorausgehenden Ansprüche, **dadurch gekennzeichnet, dass** dieser aus einem Blechmaterial gebildet ist.

8. Getriebeeinrichtung (100), insbesondere für einen Personenkraftwagen, mit wenigstens einem Getriebewellenlager (120), das mit einem Sicherungsring (200) gemäß einem der vorausgehenden Ansprüche gegen axiale Verschiebung gesichert ist.

9. Getriebeeinrichtung (100) nach Anspruch 8, **dadurch gekennzeichnet, dass** in dem Getriebewellenlager (120) eine Getriebewelle (110) aufgenommen ist, wobei diese Getriebewelle (110) über das Getriebewellenlager (120) gleichfalls gegen axiale Verschiebung gesichert ist.

## Claims

1. Circlip (200) for securing a transmission component (110) against axial displacement, wherein said circlip (200) has an opening (201) in the circumferential direction (U), at which the ends of the circlip are formed with limbs (210, 220) pointing radially (R) outwards, **characterised in that** said circlip (200) is formed as a single piece from a metal material and the limbs (210, 220) are formed comprising a clamping mechanism, for which purpose one of the limbs (220) has a spring clamp (228) or lock clamp (225) formed thereon and acting against the other limb (210), which can push the limbs (210, 220) apart in the circumferential direction (U) and can thus clamp the circlip (200) in a defined manner in the installed position.

2. Circlip (200) according to claim 1, **characterised in that** the spring clamp (228) or lock clamp (225) can be engaged with the other limb (210) only after the mounting of the circlip (200).

3. Circlip (200) according to claim 2, **characterised in that** the spring clamp (228) or lock clamp (225) is connectable in a form-fit manner with the other limb (210) via a pin connection (226, 216).

4. Circlip (200) according to claim 2, **characterised in that** the spring clamp (228) or lock clamp (225) is connectable in a form-fit manner with the other limb (210) via a profiled connection (227, 217).

5. Circlip (200) according to claim 2, **characterised in that** the spring clamp (228) is formed with a loop extending in the axial direction (L).

6. Circlip (200) according to any of the preceding claims, **characterised in that** same is formed substantially circular.

7. Circlip (200) according to any of the preceding claims, **characterised in that** same is formed from a sheet material.

8. Transmission unit (100), in particular for a passenger motor vehicle, comprising at least one transmission shaft bearing (120) which is secured against axial displacement by a circlip (200) according to one of the preceding claims.

9. Transmission unit (100) according to claim 8, **characterised in that** a transmission shaft (110) is received in the transmission shaft bearing (120), wherein said transmission shaft (110) is also secured against axial displacement via the transmission shaft bearing (120).

## Revendications

1. Bague de sécurité (200) servant à sécuriser une pièce de transmission (110) contre tout déplacement par coulissement axial, dans laquelle ladite bague de sécurité (200) présente, dans la direction périphérique (U), une ouverture (201), au niveau de laquelle les extrémités de bague sont réalisées avec des branches (210, 220) pointant radialement (R) vers l'extérieur, **caractérisée en ce que** ladite bague de sécurité (200) est formée en une seule partie à partir d'un matériau en métal, et **en ce que** les branches (210, 220) sont réalisées avec un mécanisme de serrage, une des branches (220) présentant à cet effet une bride de ressort (228) ou une bride à fermeture (225) appliquée par moulage, agissant à l'encontre de l'autre branche (210), lequel écarte les branches (210, 220) l'une de l'autre dans la direction périphérique (U) et peut ainsi serrer d'une manière définie en position de montage la bague de sécurité (200).

2. Bague de sécurité (200) selon la revendication 1, **caractérisée en ce que** la bride de ressort (228) ou la bride à fermeture (225) peut être amenée en prise avec l'autre branche (210) seulement après le montage de la bague de sécurité (200).

3. Bague de sécurité (200) selon la revendication 2, **caractérisée en ce que** la bride de ressort (228) ou la bride à fermeture (225) peut être reliée par complémentarité de forme à l'autre branche (210) par l'intermédiaire d'un système d'assemblage à broche (226, 216).

4. Bague de sécurité (200) selon la revendication 2, **caractérisée en ce que** la bride de ressort (228) ou la bride à fermeture (225) peut être reliée par complémentarité de forme à l'autre branche (210) par l'intermédiaire d'un système d'assemblage profilé (227, 217).

5. Bague de sécurité (200) selon la revendication 2, **caractérisée en ce que** la bride de ressort (228) est réalisée avec une boucle s'étendant dans la direction axiale (L).

6. Bague de sécurité (200) selon l'une quelconque des revendications précédentes, **caractérisée en ce que** ladite bague de sécurité est réalisée essentiellement de manière circulaire.

7. Bague de sécurité (200) selon l'une quelconque des revendications précédentes, **caractérisée en ce que** ladite bague de sécurité est formée à partir d'un matériau en tôle.

8. Système de transmission (100), en particulier pour une voiture particulière, comprenant au moins un palier d'arbre de transmission (120), qui est sécurisé contre tout déplacement par coulissement axial à l'aide d'une bague de sécurité (200) selon l'une quelconque des revendications précédentes.

9. Système de transmission (100) selon la revendication 8, **caractérisé en ce qu'**un arbre de transmission (110) est logé dans le palier d'arbre de transmission (120), dans lequel ledit arbre de transmission (110) est sécurisé de la même manière contre tout déplacement par coulissement axial par l'intermédiaire du palier d'arbre de transmission (120).
